# EUROPEAN PATENT APPLICATION

(11) **EP 1 935 726 A1**
(43) Date of publication of application: **25.06.2008**
(21) Application number: 06797902.1
(22) Date of filing: 13.09.2006
(51) Int. Cl.: B60R 21/26, B01J 7/00

(54) **GAS GENERATOR**

(30) Priority: 15.09.2005 JP 2005267935
(71) Applicant: NIPPON KAYAKU KABUSHIKI KAISHA, Tokyo 102-8172 (JP)
(72) Inventor: NISHIMURA, Tsuyokazu, Himeji-shi, Hyogo 679-2123 (JP); IZAKI, Naoki, Himeji-shi, Hyogo 679-2123 (JP)
(74) Representative: Intes, Didier Gérard André
(86) International application number: PCT/JP2006/318152
(87) International publication number: WO 2007/032387

(57) **Abstract**

A gas generator 1 includes a shortened cylindrical housing 2 constituted by a lower lid 2b which is an initiator shell provided with an ignitor device, and an upper lid 2a which is a closure shell for closing the lower lid 2b. Additionally, in the housing 2, an ignitor device 20, gas generants 13 and a filter material 11 are arranged in this order from the center, the ignitor device 20 being constituted by: an igniting agent filled container 19 including an igniter 9 and igniting agents 17 therein; and a cylinder body 16 provided in a state adhered to an outside surface of the igniting agent filled container 19. Thus, there can be provided a gas generator capable of stabilizing an ignition performance by a simple constitution.

## Description

### Technical Field

The present invention relates to a gas generator which is used for automobiles, etc., in particular, it relates to a gas generator which is used for airbags.

### Background Art

A gas generator, which rapidly inflates and develops an airbag in order to protect an occupant from an impact caused by an automobile crash, is built into an airbag module mounted in a steering wheel or instrument panel. The gas generator ignites an igniter (squib) by energization from a control unit (actuator), burns gas generants by this flame, and rapidly generates a large quantity of gas.

As a gas generator, which is mainly used for a driver side airbag, in this kind of gas generator, a gas generator is conventionally disclosed which includes a metallic housing having a closure shell and an initiator shell, wherein the initiator shell has a cylinder body having no contact with the closure shell, and flame spouting ports for spouting the flame from an ignitor device into a combustion chamber are formed in the cylinder body (for example, the following patent Document).

Patent Document 1: Japanese Published Unexamined Patent Application No. 2002-370607

### Disclosure of the Invention

### Problems to be Solved by the Invention

However, in the above gas generator, since a sealing material such as an aluminum tape is typically attached to the outside of the flame spouting port with an adhesive, rupturing force for rupturing the flame spoutingport when the flame spouts depends on adhesive force of the adhesive. As a result, the rupturing force changes, and an ignition performance can be hardly stabilized. Further, in the above gas generator, when a spouting direction of the spouting port provided in the cylinder body is required to be oblique, etc., other than a longitudinal axis direction or circumferential direction, it is difficult to attach the sealing material such as an aluminum tape. Furthermore, when the spouting direction of the flame spouting port provided in the cylinder body is required to be set to a plurality of directions such as a circumferential direction and an axis direction so that delay is not caused in an ignition time to gas generants, it becomes necessary that two or more kinds of sealing materials are attached, and there arise demerits to productivity and costs. Accordingly, when a priority is placed on productivity and costs, the spouting direction of the flame spouting port provided in the cylinder body is set to only one direction such as the circumferential direction or the axis direction. As a result, ignition force to the gas generants (in particular, the gas generants near a position where no flame spouting port exists) filling a space between the cylinder body and the closure shell is weakened, and the delay in the ignition time remains not to be reduced.

Thereupon, it is an object of the present invention to provide a gas generator capable of stabilizing the ignition performance by a simple constitution, and of igniting the gas generants in a shorter time than the ignition time of the conventional gas generator even in consideration of the productivity and costs.

### Means for Solving the Problems and Effects

The present invention to solve the above problems is a gas generator including: a metallic housing having a closure shell and an initiator shell; a filter material provided throughout an inner circumference of the housing in a circumferential direction; a combustion chamber which is provided in the housing and in which gas generants for generating a high-temperature gas by combustion are housed; and an ignitor device which is attached to the initiator shell and ignites the gas generants in the combustion chamber, and further including: an igniting agent filled container which has the ignitor device therein and is filled with igniting agents; and a cylinder body which is provided inside of the initiator shell and of which an inner wall is adhered to the whole outside of the igniting agent filled container, wherein the combustion chamber is formed of a space surrounded by an inner wall of the initiator shell, an inner wall of the closure shell, an innerwall of the filter material and an outer wall of the cylinder body, the cylinder body has flame spouting ports for spouting flame of the igniting agents into the combustion chamber on a side surface, and parts corresponding to the flame spouting ports of the cylinder body of the igniting agent filled container are ruptured by an impact when the igniting agents are ignited by the ignitor device.

The above constitution enables predetermined parts of the igniting agent filled container to be ruptured by rupturing force (shearing force) generated by an ignition impact in the flame spouting port provided in the cylinder body when the igniting agents are ignited by the ignitor device. Accordingly, there can be provided a gas generator capable of stabilizing an ignition performance by a simple constitution, and of igniting the gas generants in a shorter time than the ignition time of the conventional gas generator even in consideration of productivity and costs. A material of a tape to be attached to the outside of the flame spoutingport has been conventionally limited to a small quantity of materials. However, a material, which cannot be used for the conventional tape, can be used as a material of the igniting agent filled container in the present invention. Therefore, an adjustment range of force (rupturing force) for rupturing the igniting agent filled container by the ignition impact can be greatly spread, and a selection range of the material regarding the costs can be spread. Moreover, the above rupturing force can be adjusted based on, for example, the quality and thickness of a material to be used for the igniting agent filled container, and the diameter of the flame spouting port. Further, although, in the conventional gas generator, toxic gas is generated by combustion of an adhesive owing to usage of the adhesive in the case of adhering an aluminum tape, etc., to the outside of the flame spouting port, the toxic gas by the combustion of the adhesive is not generated owing to no use of such adhesive in the present invention.

In the gas generator of the present invention, it is preferable that ends of the closure shell sides of the igniting agent filled container and the cylinder body are formed so as to be similar to each other in a shape of any one of flat, hemispheric, spherical band, cone, pyramid, polyhedron and staircase. Additionally, it is further preferable that flame spouting ports for rupturing predetermined parts of the end of the igniting agent filled container by an impact when the igniting agents are ignited by the ignitor device and for spouting the flame of the igniting agents into the combustion chamber in a predetermined direction are formed in the end of the closure shell side of the cylinder body. The shape of the end of the closure shell side is not limited to the above shapes, and various complicated shapes are applicable. For example, included in a shape in which unevenness is irregularly formed.

According to the above constitution, the flame can be efficiently spouted into the whole combustion chamber and brought into contact with all the gas generants by the shapes of the ends of the closure shell sides of the igniting agent filled container and the cylinder body, and by flame spouting ports which are provided in the end and side surface of the cylinder body and through which the flame generated at the ignition is spouted into the combustion chamber in the predetermined direction. Accordingly, the gas generants can be securely and efficiently ignited with a small quantity of the igniting agent.

In the gas generator of the present invention, it is preferable that opening side ends of the igniting agent filled container and the cylinder body are formed in a flange shape to be collars, and that the collars of the igniting agent filled container and the cylinder body are crimped and fixed to the initiator shell together in a direction from a circumference side to the inside.
According to the above constitution, there can be provided a gas generator capable of being easily assembled to realize an improvement inproductivity and cost reduction, and excellent in environment resistance such as vibration.

In the gas generator of the present invention, it is preferable that the igniting agent filled container is formed of aluminum, iron, steel, copper, alloy of these metals, or resin. In particular, it is preferable that the thickness is properly changed in accordance with these materials.
According to the above constitution, the force for rupturing the igniting agent filled container by the impact at ignition canbe systematically changedbasedon the strength and thickness of the material, and therefore the ignition performance can be controlled.

In the gas generator of the present invention, it is preferable that: a pressing lid member for pressing and holding the filter in the housing is provided; the filter has a plurality of through-holes in a side surface, and includes a hollow cylinder, of which at least one bottom surface is opened, and a filter material formed on an outer circumference of the hollow cylinder; and projecting parts of both ends of the hollow cylinder in an axis direction project from the filter material in the axis direction.

According to the above constitution, since the filter material canbeminiaturizedand lightened, there can be provided a miniaturized and lightened filter for gas generators which has a simple constitution, canbeeasilymanufacturedat low-cost. Additionally, when the filter is built into the gas generator, the hollow cylinder can reduce damage that is caused to the filter material by the combustion of the gas generants, and can prevent particles generated by the combustion from leaking outside of the gas generator. In the conventional filter, when the filter is filled with the gas generants, an upper end of the filter has served as a "dam" for preventing the gas generants from overflowing. Thus, the vertical length of the filter has been required to correspond to the vertical length of a gas generant housing chamber. That is, a useless part has been conventionally constituted in the filter, the part not fulfilling essential performances of a filter, cooling the high-temperature gas and reducing the number of the particles leaked outside of the gas generator. However, in the present invention, only both ends of the hollow cylinder serve as the "dam," because of projecting from the filter material in the axis direction. As a result, the filter material can be miniaturized and lightened in the axis direction, and thus the gas generator can be miniaturized and lightened. Further, in the present invention, only the hollow cylinder may be lengthened even in the case where the housing is vertically enlarged in the axis direction so that the housing quantity of the gas generants is increased, and it is not necessary to vertically enlarge, similarly to the conventional gas generator, the filter material in the axis direction. Therefore, the weight of the gas generator can be suppressed to a minimum with a filter effect kept.

In the gas generator of the present invention, it is preferable that the hollow cylinder includes: a first through-hole group formed in a band-shaped region in a circumferential direction; a second through-hole group formed in a band-shaped region and having a predetermined distance from the first through-hole group; and a part which is formed between the first through-hole group and the second through-hole group, and has no through-hole, and preferable that the igniter includes flame transmitting holes through which the flame is spouted toward the part having no through-hole when the igniter is ignited.

According to the above constitution, since the filter material is protected from the flame spouted from the ignitor device at the ignition, melting damage and reduction of the performance of the filter can be suppressed.

In the gas generator of the present invention, it is preferable that the pressing lid member holds outer circumferences of the projecting parts of both ends of the hollow cylinder in the axis direction and seals openings of both ends of the hollow cylinder. Moreover, the projecting parts of both ends in the axis direction are parts in which the hollow cylinder vertically projects in the axis direction with respect to the filter material. Additionally, the pressing lid member is not required to cover the whole projecting parts of both ends in the axis direction and may cover the projecting parts more than a deformation amount of the housing of the gas generator after the ignition in the axis direction when holding the outer circumferences of the projecting parts of both ends in the axis direction.

Since the pressing lid member seals the openings while holding the outer circumferences of both ends of the hollow cylinder as in the above constitution, assembling property can be improved. Additionally, in the conventional gas generator, the gas generants are cracked due to insertion of the pressing lid member into an inside of the filter. However, according to the present invention, an effect is realized such that no gas generant is cracked in assembling.

In the gas generator of the present invention, it is preferable that the projecting parts of both ends of the hollow cylinder in the axis direction have no through-hole.

According to the above constitution, since the inside of the hollow cylinder filled with the gas generants communicates with an outside of the filter material having gas discharging ports formed in the housing via only the filter material by covering and sealing the outsides of the projecting parts of both ends of the hollow cylinder in the axis direction and the projecting parts of both ends of the hollow cylinder in the axis direction with the lid member, etc., the gas and particles generated by the combustion of the gas generants always pass through the filter material when the filter is built into the gas generator, and cooling and particle collecting effects by the filter can be securely obtained. Additionally, if a deformation amount of the metallic housing is smaller than the length in the axis direction length of the part having no through-hole in the projecting parts of both ends of the hollow cylinder in the axis direction even in the case where the metallic housing is deformed due to an inner pressure of the container after ignition by covering and sealing the outsides of the projecting parts of both ends in the axis direction and the projecting parts of both ends in the axis direction of the hollow cylinder with the lid member, etc., the gas and particles generated by the combustion always pass through the filter material, and the cooling and particle collecting effects by the filter can be securely obtained.

In the gas generator of the present invention, it is preferable that the through-hole is formed in a desired shape, size and position so that a part of the cylinder blocks the flame spouted from the igniter at the ignition to protect the filter material and to control a gas flow path when the filter is built into the gas generator having the igniter.

According to the above constitution, since the flame spouted from the ignitor device at the ignition directly comes into contact with the filter material by adjusting the through-hole into the desired shape, size and position, the melting damage of the filter material is suppressed, the gas flow path can be controlled, and an efficient filter constitution can be realized.

In the gas generator of the present invention, it is preferable that the filter material includes: a first filtering-cooling part formed on the outer circumference of the hollow cylinder; and a second filtering-cooling part which is formed on an outer circumference of the first filtering-cooling part and is shorter than the first filtering-coolingpart in the axis direction, and that the first filtering-cooling part and second filtering-cooling part form a staircase shape on at least one of projecting parts of both ends in the axis direction.

According to the above constitution, since the filter for gas generators, of which both ends are formed into the staircase shape, can fit even to a gas generator having a housing of which the inside is in a curve shape, there can be provided a filter for gas generators capable of being efficiently arranged in the housing. Moreover, even if the above first filtering part and second filtering part are integrally formed, the same effect can be obtained.

In the gas generator of the present invention, it is preferable that the filter material is in a winding shape formed by winding a wire around the outer circumference of the hollow cylinder.

According to the above constitution, there can be provided a filter for gas generators that can be easily manufactured owing to a simple constitution and has a high filter performance. Additionally, since the filter material is in the winding shape formed by winding the wire around the outer circumference of the hollow cylinder, the shape of the filter material is easily kept. Additionally, since the hollow cylinder and the filter material can be integrated with each other by winding the filter rod around the outer circumference of the hollow cylinder, the filter can hardly been deformed, and the number of parts can be reduced.

In the gas generator of the present invention, it is preferable that the filter material is formed by winding a metal plate around the outer circumference of the hollow cylinder, the metal plate having a plurality of holes and havingproj ecting parts on circumferences of the holes. According to the above constitution, there can be provided a filter for gas generators that can be easily manufactured owing to a simple constitution and has the high filter performance.

In the gas generator of the present invention, it is preferable that the hollow cylinder is formed by processing a wire net or porous plate. There can be provided a filter for gas generators that can be easily manufactured owing to a simple constitution and is low-priced.

### Best Mode for Carrying Out the Invention

Embodiments of the present invention will be described hereinafter with reference to the accompanying drawings.

### First Embodiment

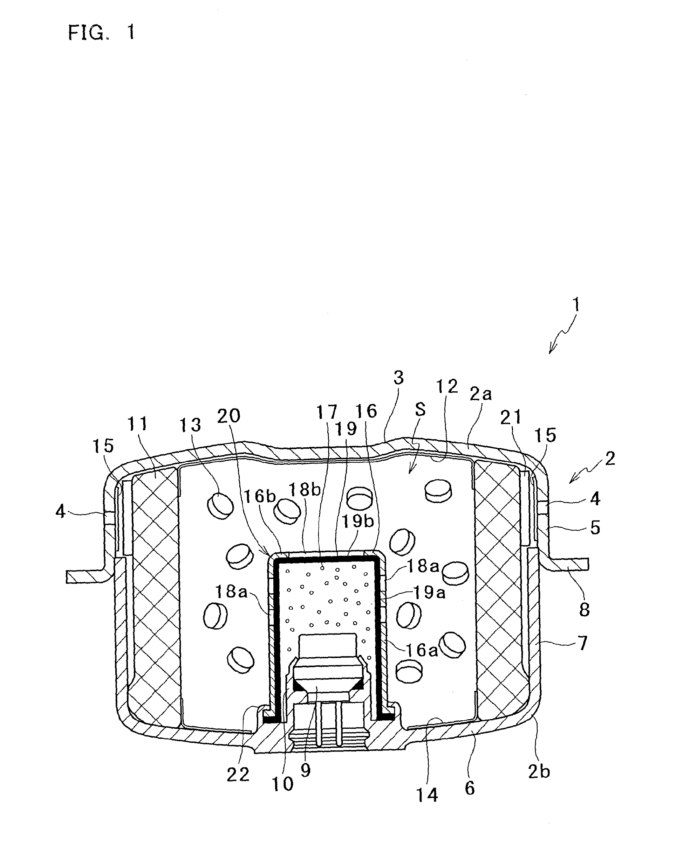

Fig. 1 is a cross sectional viewof a gas generator according to a first embodiment of the present invention. A gas generator 1 shown in Fig. 1 includes a shortened cylindrical housing 2 constituted by a lower lid 2bwhich is an initiator shell provided with an ignitor device, and an upper lid 2a which is a closure shell for closing the lower lid2b. Additionally, in the housing 2, an ignitor device 20, gas generants 13 and a filter material 11 are arranged in this order from the center, the ignitor device 20 being constituted by: an igniting agent filled container 19 including an igniter 9 and igniting agents 17 therein; and a cylinder body 16 provided in a state adhered to an outside surface of the igniting agent filled container 19.

The upper lid 2a includes: a top board 3; a side cylinder 5 extended downward from the whole circumference edge of the top board 3 and having a great number of gas discharging ports 4; and a flange 8 which is horizontally extended outward from the side cylinder 5 and to which an airbag (not illustrated) is to be attached.

The lower lid 2b includes: a bottom board 6; and a side cylinder 7 extended upward from the whole circumference edge of the bottom board 6. An igniter holding part 10 for crimping and fixing the igniter 9 is integrally formed with the center of the bottom board 6. Additionally, a projecting part 22 for crimping and fixing the igniting agent filled container 19 and the cylinder body 16 together is integrally formed with the periphery of the igniter holding part 10 of the bottom board 6.

Moreover, the upper lid 2a and lower lid 2b are formed of iron, steel, etc. Anything is applicable as long as wrought iron, iron, steel, alloy steel, etc., which is generally used in forging, drawing, press-molding, etc., is used for the iron or steel.

Additionally, the upper lid 2a and lower lid 2b are molded by repetition of partial pressurization fluidization. Here, the repetition of the partial pressurization fluidization means that in general forging, drawing, etc., each is partially repeated. Accordingly, the upper lid 2a and lower lid 2b are molded by subjecting a sheet of plate-shaped iron or steel, or apiece of block-shaped iron or steel in combination of forging, drawing, press-molding, etc., with use of a mold, etc., corresponding to each part of the lids 2a, 2b.

The thus molded upper lid 2a and lower lid 2b are connected to each other by the side cylinders 5 and 7 to form a single cylinder type shortened cylindrical housing 2. Here, electronic beam welding, laser welding, friction pressure welding, etc., can be employed as a connecting method.

In the housing 2, the filter material 11 is interposed from the upper lid 2a to the lower lid 2b along the side cylindrical part (side cylinders 5, 7), and held by a pressing lid member 12 provided inside of the top board 3 of the upper lid 2a. Additionally, a combustion chamber S is formed on an inner circumference of the filter material 11, and filled with the gas generants 13.

The cylinder body 16 includes a side cylindrical part 16a and a bottom part 16b. A plurality of flame spouting ports 18a for spouting flame in a diameter direction are provided in the side cylindrical part 16a. A flame spouting port 18b for spouting the flame toward the upper lid 2a is provided in the center of the bottom part 16b. Additionally, a flange is provided at the edge of an opening of the cylinder body 16. Moreover, the flame spouting port 18b may be formed so that the flame is spouted toward the upper lid 2a, and a plurality of flame spouting ports 18b may be provided in the bottom part 16b. Further, the flame spouting port 18b may be provided at the corner part between the bottom part 16b and the side cylindrical part 16a.

The igniting agent filled container 19 includes a side cylinder 19a and a bottom part 19b, and a flange is provided at the edge of an opening of the container 19. Moreover, in the present embodiment, the diameter of the flange of the igniting agent filled container 19 is the same as that of the flange of the cylinder body 16. However, the diameters are not always required to be the same, and both the container 19 and the cylinder body 16 may be only crimped and fixed together. Additionally, rupturing force for opening the igniting agent filled container 19 by an ignition impact can be systematically changed in accordance with the strength of a material to be used, and therefore an ignition performance can be controlled. Forexample, aluminum, iron, steel, copper, alloyof thesemetals, resin, etc., can be cited as a material of the igniting agent filled container 19, however, the metal is not limited thereto.

The ignitor device 20, in the approximate center of the housing 2, is formed by covering the igniter 9 attached to the igniter holding part 10 formed on the lower lid 2b with the igniting agent filled container 19 filled with the igniting agents 17, and by crimping and fixing the flange of the igniting agent filled container 19 and the flange of the cylinder body 16 adhesively covering the outside of the igniting agent filled container 19 together by the projecting part 22 provided on the lower lid 2b.

A cross section of a ring member 14 is in an L-shape, an outer circumference edge thereof is arranged abutting against a lower endof the inner circumference side of the filter material 11. Additionally, an outside surface of a ring-shaped part of the ring member 14 is arranged abutting against the lower lid 2b.

A filter pressing member 21 is provided on an outer circumferential part, which is positioned in the peripheral parts of the gas discharging ports 4, of the filter material 11. The filter pressing member 21 is a member, a so called punching metal, whose plate-shaped member having a plurality of holes is formed in a ring shape. Since the filter pressing member 21 is thus provided on the outer circumferential part, which is positioned in the peripheral parts of the gas discharging ports 4, of the filter material 11, deformation of the filter material 11 by pressure is suppressed when the gas is discharged from the housing 2.

The pressing lid member 12 and the ring member 14 prevent the generated gas from flowing out from a gap between an inner surface of the housing 2 and the filter material 11 when the housing 2 is deformed during operation of the gas generator 1. Moreover, sealing members (aluminum foil member, etc) 15 are adhered to seal inside openings of a large number of the gas discharging ports 4 provided in the side cylinder 5 of the upper lid 2a respectively, so that airtightness in the housing 2 is secured.

As the gas generant 13, an organic compound-based gas generant can be cited in which an oxidizer such as nitrate or oxohalogen acid salt is added and mixed to a nitride containing organic compound, which is fuel, such as a tetrazole-based compound, triazole-based compound, azodicaboxylic acid amide-based compound or guanidine-based compound.

Next, the point of assembling the gas generator 1 will be described with reference to Fig. 1. A packing (not illustrated) is first brought into contact with the igniter holding part 10 of the lower lid 2b to crimp and fix the igniter 9. And then, the flange of the igniting agent filled container 19, which is filled with the igniting agents 17, and the flange of the cylinder body 16, which is fitted onto and covers the igniting agent filled container 19, are crimped and fixed together by the projecting part 22 of the lower lid 2b. Next, the ring member 14 is inserted into and arranged in the lower lid 2b, and the filter material 11 is inserted into the lid 2b. A space surrounded by the filter material 11 is filled with the gas generants 13, and the pressing lid member 12 is arranged. The lower lid 2b is lastly covered with and connected to the upper lid 2a, in which the gas discharging ports 4 are sealed with the sealing members 15 respectively, and thus the gas generator 1 shown in Fig. 1 is obtained.

Next, operation of the gas generator of the present embodiment will be described with reference to Fig. 1. When a crash detecting apparatus arranged in a vehicle detects a crash of the vehicle, the igniter 9 is ignited by a detecting signal of the crash, and the igniting agents 17 in the igniting agent filled container 19 are ignited by the ignition flame. The flame, of which thermal energy from the igniter 9 is raised by the igniting agents 17, is spouted out from the flame spouting ports 18a formed in the side cylindrical part 16a of the cylinder body 16 and the flame spouting port 18b formed in the bottom part 16b. The flame from the flame spouting ports 18a, 18b is spouted toward the upper lid 2a, which is the closure shell of the housing 2, and toward the side cylinder 7 of the lower lid 2b, which is the initiator shell of the housing 2, and the gas generants 13 are totally burnt.

According to the gas generator 1 of the present embodiment, parts opposite the flame spouting ports 18a, 18b of the igniting agent filled container 19 respectively can be ruptured by shearing force of the ignition impact in the flame spouting ports 18a, 18b provided in the cylinder body 16 in igniting the igniting agents 17 with the ignitor device 20. Accordingly, there can be provided the gas generator 1 capable of stabilizing the ignition performance by a simple constitution, and of securely and effectively igniting the gas generants 13 with a small quantity of the igniting agent.

Additionally, the gas generator 1 of the present embodiment can be easily assembled and is excellent in environment resistance including vibration, etc., because of a simple constitution that the igniting agent filled container 19 and the cylinder body 16 are crimped and fixed together.

Additionally, in the gas generator 1 of the present embodiment, the rupturing force for rupturing the igniting agent filled container 19 by the impact of ignition can be systematically changed in accordance with the strength of the material qualitywhen the material quality of the igniting agent filled container 19 is properly changed, so that the ignition performance can be controlled. The material quality of a tape to be adhered to the outside of the flame spouting ports 18a, 18b is limited to a small quantity of material qualities in a conventional gas generator. However, since a material quality, which is unusable in the conventional gas generator, can be used as a material quality of the igniting agent filled container 19 in the present embodiment, an adjustment range of the force for rupturing the igniting agent filled container 19 by the impact of ignition can be greatly expanded, and a range of selecting the material quality in terms of cost can also be expanded. More specifically, the above rupturing force, concretely, can be adjusted based on the quality and thickness of the material to be used for the igniting agent filled container 19, the diameters of the flame spouting ports 18a, 18b, etc.

### Modification of First Embodiment

Next, modification of the first embodiment will be described. The same symbols are attached to parts similar to the first embodiment respectively, and description of the parts may be omitted.

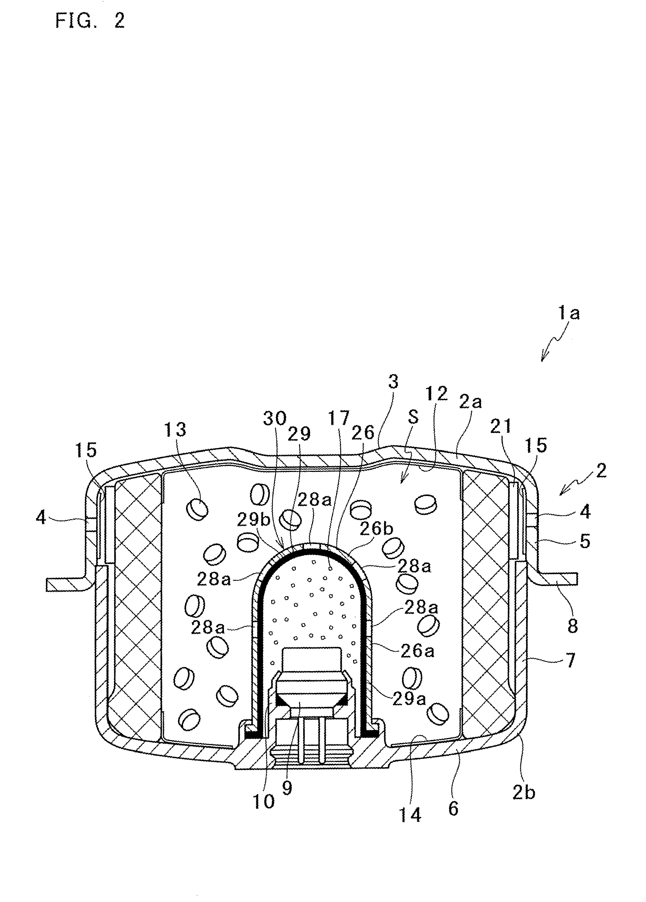

Fig. 2 is a cross sectional view of a gas generator of themodificationof the first embodiment according to the present invention. In a gas generator 1a of the modification, an igniting agent filled container 29 includes a side cylindrical part 29a and a hemispherical part 29b, and a cylinder body 26 includes a side cylindrical part 26a and a hemispherical part 26b. In these points, the gas generator 1a is different from the gas generator 1 according to the first embodiment. Additionally, positions of flame spouting ports 28a provided in the cylinder body 26 are different. That is, one of the flame spouting ports 28a is provided at the top of the cylinder body 26 and a plurality of the ports 28a are provided in the circumference of the side cylindrical part 29a. Further, a plurality of the ports 28a are provided in a curved part in the middle between the port 28a formed at the top of the cylinder body 26 and the ports 28a formed in the circumference of the side cylindrical part 29a.

According to the gas generator 1a of the modification, the same performance and effect as those of gas generator 1 of the first embodiment can be obtained.

Moreover, although the igniting agent filled container 29 including the side cylindrical part 29a and the hemispherical part 29b, and the cylinder body 26 including the side cylindrical part 26a and the hemispherical part 26b are shown in the modification, the hemispherical parts 26b, 29b each may be substituted with any one of another spherical crown, spherical-band-shaped part, conical part, pyramidal part, polyhedron-shaped part, steps attached (e.g.staircase-shaped) part. The hemispherical parts 26b, 29b of the modification can be similarly used in a second embodiment described below.

Additionally, a position to be provided with the flame spouting port can be properly changed so as to control ignition of the gas generants. This can be applied to the second embodiment described below.

### Second Embodiment

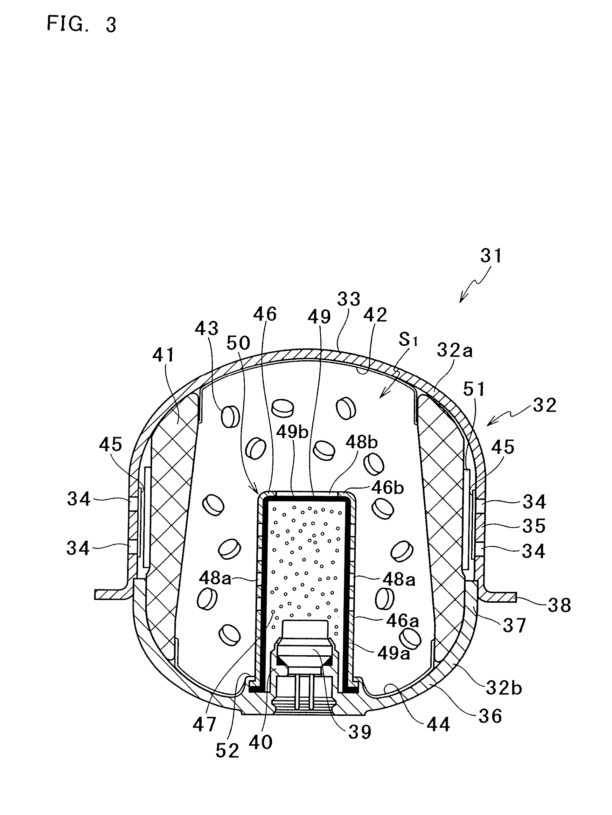

Fig. 3 is a cross sectional viewof a gas generator according to the second embodiment of the present invention. A gas generator 31 shown in Fig. 3 is approximately spherical and includes: a lower lid 32b which is an initiator shell provided with an ignitor device; and an upper lid 32a which is a closure shell for closing the lower lid 32b. Additionally, in a housing 32, an ignitor device 50, gas generants 43 and a filter material 41 are arranged in this order from the center, the ignitor device 50 being constituted by: an igniting agent filled container 49 including an igniter 39 and igniting agents 47 therein; and a cylinder body 46 provided in a state adhered to an outside surface of the igniting agent filled container 49.

The upper lid 32a includes: a top board 33; a side cylinder 35 extended downward from the whole circumference edge of the top board 33 and having a great number of gas discharging ports 34; and a flange 38 which is horizontally extended outward from the side cylinder 35 and to which an airbag (not illustrated) is to be attached.

The lower lid 32b includes: a bottom board 36; and a side cylinder 37 extended upward from the whole circumference edge of the bottom board 36. An igniter holding part 40 for crimping and fixing the igniter 39 is integrally formed with the center of the bottom board 6. Additionally, a projecting part 52 for crimping and fixing the igniting agent filled container 49 and the cylinder body 16 together is integrally formed with the periphery of the igniter holding part 40 of the bottom board 36.

Moreover, the materials of the upper lid 2a and lower lid 2b of the first embodiment can also be used for the upper lid 32a and lower lid 32b, and the housing 32 can be formed by the method of forming the housing 2 of the first embodiment.

In the housing 32, the filter material 41 is interposed from the middle of the upper lid 2a to the middle of the lower lid 2b along the side cylindrical part (side cylinders 35, 37), and held by a pressing lid member 42 provided inside of the top board 33 of the upper lid 32a. Additionally, a combustion chamber S₁ is formed on an inner circumference of the filter material 41, and filled with the gas generants 43.

The cylinder body 46 includes an elongated side cylindrical part 46a and a bottom part 46b. A plurality of flame spouting ports 48a for spouting flame in a diameter direction, are provided in the side cylindrical part 46a. A flame spouting port 48b for spouting the flame toward the upper lid 32a is provided in the center of the bottom part 46b. Additionally, a flange is provided at the edge of an opening of the cylinder body 46. Moreover, the flame spouting port 48b may be formed so that the flame is spouted toward the upper lid 32a, and a plurality of flame spouting ports 48b may be provided in the bottom part 46b. Further, the flame spouting port 18b may be provided at the corner part between the bottom part 46b and the side cylindrical part 46a.

The igniting agent filled container 49 includes an elongated side cylindrical part 49a and a bottom part 49b, and a flange is provided at the edge of an opening of the container 49. Moreover, in the present embodiment, the diameter of the flange of the igniting agent filled container 49 is the same as that of the flange of the cylinder body 16. Additionally, the material of the igniting agent filled container 19 of the first embodiment can also be used for the container 49. Further, rupturing force for rupturing the igniting agent filled container 49 by an ignition impact can be systematically changed in accordance with the strength of a material to be used similarly to the igniting agent filled container 19 of the first embodiment, and therefore the ignition performance can be controlled.

Similarly to the ignitor device 20 of the first embodiment, the ignitor device 50, in the approximate center of housing 32, is formed by covering the igniter 39 attached to the igniter holding part 40 formed on the lower lid 32b with the igniting agent filled container 49 filled with the igniting agents 47, and by crimping and fixing the flange of the igniting agent filled container 49 and the flange of the cylinder body 46 adhesively covering the outside of the igniting agent filled container 49 with the projecting part 52 provided on the lower lid 32b.

A cross section of a ring member 44 is in an approximate U-shape, an outer circumference edge thereof is arranged abutting against a lower end of the inner circumference side of the filter material 41. Additionally, an outside surface of a ring-shaped part of the ring member 44 is arranged abutting against the lower lid 32b, and an inner circumference edge of the ring-shaped part is arranged abutting against a base of the projecting part 52.

A filter pressing member 51 is provided on the outer circumference side, which is positioned at the peripheral part of the gas discharging port 34, of the filter material 41. Moreover, the filter pressing member 51 may be similar to the filter pressing member 21 of the first embodiment.

The pressing lid member 42 and the ring member 44 prevent the generated gas from flowing out from a gap between the inner surface of the housing 32 and the filter material 41 when the housing 32 is deformed during operation of the gas generator 31. Moreover, sealing members (aluminum foil member, etc.) 45 are adhered to seal inside openings of a large number of the gas discharging ports 34 provided in the side cylinder 35 of the upper lid 32a respectively, so that airtightness in the housing 32 is secured.

The gas generants 43 may be similar to the gas generants 13 of the first embodiment.

Next, the point of assembling the gas generator 31 will be described with reference to Fig. 3. First, a packing (not illustrated) is brought into contact with the igniter holding part 40 of the lower lid 32b to crimp and fix the igniter 39. And then, the flange of the igniting agent filled container 49 filled with the igniting agents 47 and the flange of the cylinder body 46, which is fitted onto and covers of the igniting agent filled container 49, are crimped and fixed together by the projecting part 52 of the lower lid 2b. Next, the ring member 44 is inserted into and arranged on the lower lid 32b, and the filter material 12 is inserted into the lid 32b. A space surrounded by the filter material 41 is filled with the gas generants 43, and the pressing lid member 42 is arranged. The lower lid 32b is lastly covered with and connected to the upper lid 32a, in which the gas discharging ports 34 are sealed with the sealing members 45 respectively, and thus the gas generator 31 shown in Fig. 3 is obtained.

According to the gas generator 31 of the present embodiment, the same performance and effect as those of gas generator 1 of the first embodiment can be obtained.

### Third Embodiment

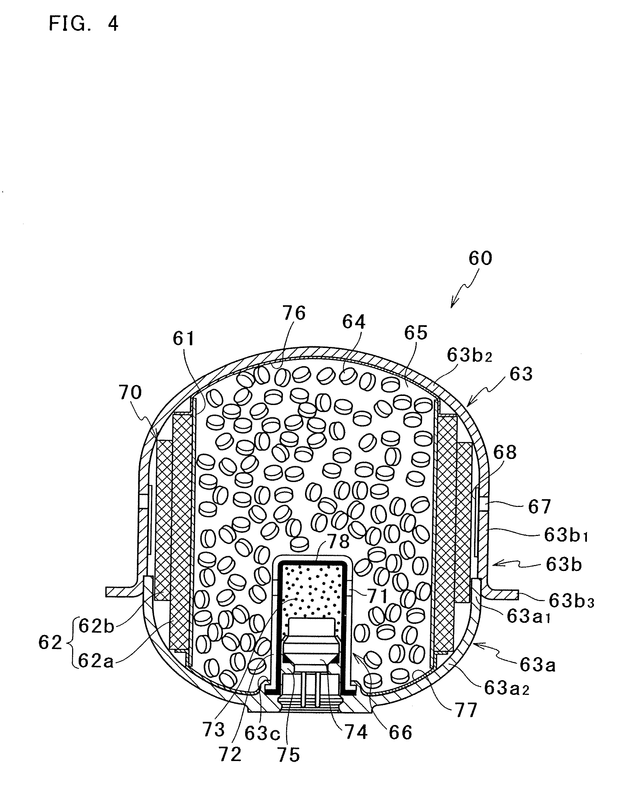

Next, a gas generator according to a third embodiment of the present invention will be described. In Fig. 4, a gas generator 60 includes: an approximate spherical housing 63 formed by connecting a lower lid 63a to an upper lid 63b by press welding, welding, etc.; a combustion chamber 65 which is formed in the housing 63 and is filled with gas generants 64 for generating a high-temperature gas by combustion; a filter for gas generators 70 arranged around the combustion chamber 65; and an ignitor device 66 which is attached to the housing 63 and ignites the gas generants 64 in the combustion chamber 65. Moreover, the lower lid 63a and upper lid 63b are made of metal suchas iron, stainless steel, aluminum, steel material, etc.

The lower lid 63a includes a cylindrical part 63a₁ and a hemispherical bottom board 63a₂ formed continuously from the cylindrical part 63a₁. The ignitor device 66 is provided at the center of the bottom board 63a₂. The ignitor device 66 includes: an igniting agent filled container 78 including an igniter 74 and igniting agents 73 therein; and a cylindrical body 72 provided in a state adhered to an outside surface of the igniting agent filled container 78. The igniting agent filled container 78 is similar to the igniting agent filled container 19 of the first embodiment.

The cylinder body 72 and the igniting agent filled container 78 are crimped and fixed to an igniter holding part 75 by a projecting part 63c formed on the inner side of the lower lid 63a. The igniter holding part 75 is fixed to the bottom board 63a₂ by an arbitrary method such as welding so that the cylinder body 72 is fixed to the lower lid 63a. Additionally, the cylinder body 72 is an elongated cylinder running from one end to the center of the combustion chamber 65 formed in the housing 63. A plurality of oval hole-shaped flame spouting ports 71 are formed in a circumferential part of the cylinder body 72 in an axis direction. The flame spouting ports 71 adjacent to each other in a circumferential direction of the cylinder body 72 are juxtaposed. Moreover, the ports 71 may be formed zigzag in the circumferential direction so as not to be juxtaposed. In this case, thermal flow spouted from the ignitor device 66 is efficiently spouted into the whole combustion chamber 65. Additionally, the flame spouting port 71 may be formed at the top of the cylinder body 72. Further, these flame spouting ports 71 are not limited to a round hole, and may be an oval hole.

The upper lid 63b includes: a cylindrical part 63b₁; a hemispherical top board 63b₂ formed continuously from the cylindrical part 63b₁; and a flange part 63b₃ extended outward from the cylindrical part 63b₁ in a diameter direction.

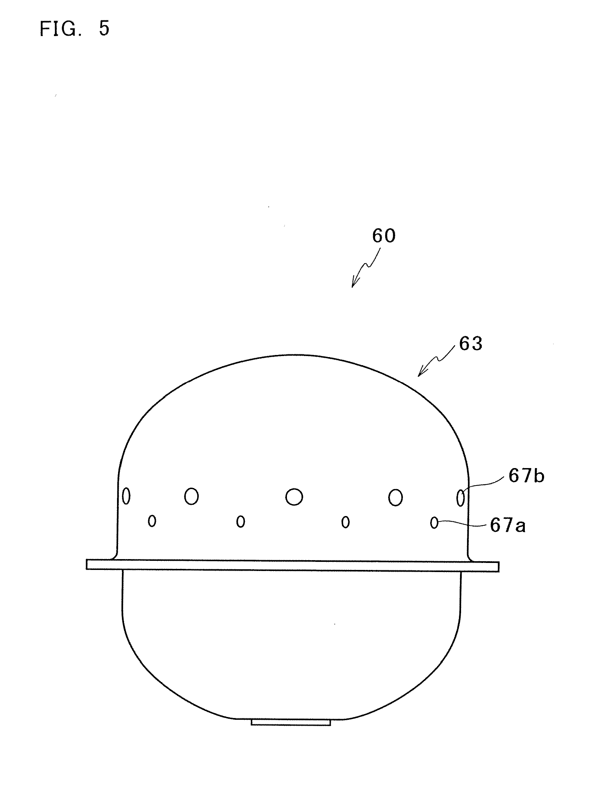

It is preferable that a plurality of gas discharging ports 67 (67a, 67b in Fig. 5) are formed zigzag in two lines in the circumference of the cylindrical part 63b₁ of the upper lid 63b. Since gas generated in the housing 63 is dispersedly discharged by forming the gas discharging ports 67 zigzag, damage to the filter material 62 can be suppressed. Additionally, the filter material 62 can be used in a wide range, thereby the filter material 62 can be efficiently used. The gas dischargingports 67 are not always required to be formed zigzag, and may be, for example, formed in a single line. If the ports 67 are formed in two or more lines, the same effect as that of the ports formed zigzag can be obtained.

Moreover, the gas discharging ports 67a, 67b are sealed with a band tape-shaped sealing member 68, which is attached to an inner circumferential part of the cylindrical part 63b₁, such as band-shaped aluminum, steel or stainless steel so that the combustion chamber 65 is sealed up. The thicknesses and strengths of the sealing members 68 are provided so as to be different from each other in accordance with the diameters of the gas discharging ports 67a, 67b and performances desired in the gas generator 60.

In the housing 63 including the lower lid 63a and upper lid 63b, a filter 70 arranged around the combustion chamber 65 is provided along inner walls of the cylindrical parts 63a₁, 63b₁. Outside circumferences (regions having no hole) of both ends of a hollow cylinder 61 and both end surfaces of a filtering-cooling part 2a in the filter 70 are fixed and held by a pressing lid member 76 and the ring member 77 which are provided on inner surfaces of the bottom board 63a₂ of the lower lid 63a and the top board 63b₂ of the upper lid 63b respectively. Additionally, the pressing lid member 76 and the ring member 77 are members for preventing the gas from leaking from both ends of the hollow cylinder 61. Moreover, the pressing lid member 76 and the ring member 77 are not always required to cover the whole outside circumferences (regions having no hole) of both ends of the hollow cylinder 61, and may cover them at a deformation amount or more of the housing in the gas generator after ignition.

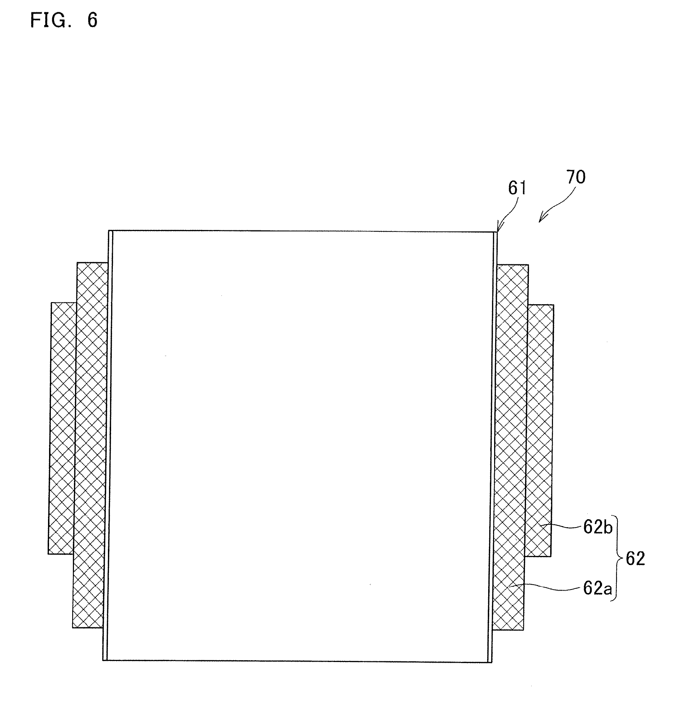

As shown in Fig. 6, the filter 70 includes the hollow cylinder 61 and the filter material 62. A space surrounded by the filter 70 is filled with the gas generants 64. The space forms into the combustion chamber 65 for burning the gas generants 64 by the thermal flow from the ignitor device 66.

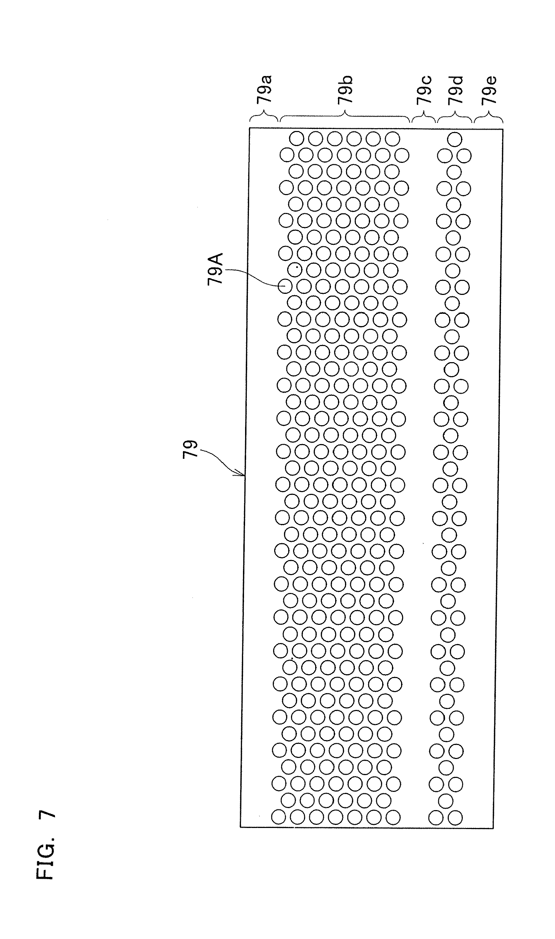

As shown in Fig. 7, the hollow cylinder 61 is formed by cylindrically bending a sheet of metal plate 79 in a longitudinal direction. A plurality of through-holes 79A are provided at desired positions in the metal plate 79, and band-shaped regions 79a, 79c and 79e having no hole and band-shaped regions 79b, 79d having through-holes are formed in the longitudinal direction. Moreover, a position, size and shape of a through-hole 79A are properly changed in accordance with a desired performance. For example, when a part of the flame from the ignitor device in the gas generator is required to be blocked, the through-holes 79A are provided in the regions 79b, 79d so that the region 79c can block the part of the flame (see Fig. 7). Additionally, for example, the through-holes 79A are arranged in the regions 79b, 79d so that a set of the through-holes 79A adjacent to each other are alternatively shifted (see Fig. 7) or arranged in the regions 79b, 79d so as to form a regular procession.

Moreover, for example, stainless steel, iron, steel, etc., can be used for the metal plate 79. Additionally, the hollow cylinder 61 may be formed of not only a punching metal such as the metal plate 79 but also expandable metal or wire netting.

The filter material 62 includes: the filtering-cooling part 62a formed on an outer circumference of the hollow cylinder 61; and a filtering-cooling part 62b formed on an outer circumference of the filtering-cooling part 62a so as to be shorter than the part 62a in the axis direction. Ends of the filtering-cooling parts 62a, 62b are formed so as to be in a two-step staircase, and the parts 62a, 62b are formed so as to cover the regions 79b, 79c and 79d of the metal plate 79 processed into the hollow cylinder 61. Accordingly, assuming the hollow cylinder 61 and the filter material 62 are made integrated, the filter for gas generators 70 is in a three-step staircase that both ends of the hollow cylinder 61 project from both ends of the filter material 62 in the axis direction respectively. Moreover, the filtering-coolingparts may cover only the regions 79b, 79d.

Moreover, the filtering-cooling parts 62a, 62b may be, for example, an object that a knit metal net, plain-woven metal net, etc., is processed, or an object that a simple expandable metal, expandable metal including a projecting part on a circumferential edge of the through-hole, etc., is wound several times. However, it is preferable that the parts 62a, 62b are constituted by a winding that a filter rod is wound so as to provide a predetermined gap through which a fixed amount of gas canpass. Additionally, the filter material 62 maybe formed which has a staircase shape with three or more steps, by further forming a filtering-cooling part around the filtering-cooling part 62b, or may have no staircase shape. Further, the filtering-cooling parts 62a, 62b may be integrally formed with each other, or formed separately from each other.

According to the present embodiment, since the filter material 62 can be miniaturized and lightened, the filter 70 can be provided which has a simple construction and can be manufactured easily and at low cost. Additionally, when the filter is built into the gas generator 60, the hollow cylinder 61 can reduce damage that is caused to the filter material 62 by combustion of the gas generants, and can prevent particles generated by the combustion from leaking outside of the gas generator. Further, the filter 70 can be easily manufactured due to a simple constitution, and can have a high filter performance.

Additionally, the shape retaining strength of the filter 70 is far superior to that of a conventional filter only using a metal thin wire assembly. In the conventional filter only using the metal thin wire assembly, if the shape retaining strength of the filter material is low, there is a risk that the filter material is deformed and damaged in receiving gas pressure. When the filter material, which is used as, for example, a component of a gas generator of an airbag system, is thus damaged, slag having a high temperature is leaked into an airbag, and consequently not only the airbag is damaged and a performance of the airbag is lowered but also there is a risk of an occupant being burned. From such a perspective, it is important the hollow cylinder 61 is provided in the inner side of the filter 70 so that the shape retaining strength of the filter 70 is secured.

Next, operation of the gas generator 60 will be described. Here, the case of mounting the gas generator 60 on an airbag systemwill be described. When a crash sensor (not illustrated) detects a crash of a vehicle, the igniter 74 of the ignitor device 66 is ignited to ignite the igniting agents 73 by a crash detecting signal, and the flame is spouted from the flame spouting ports 71 of the cylinder body 72 to the gas generants 64 to ignite the gas generants 64 and to generate a high-temperature and high-pressure gas. At this time, if a part, with which the flame generated by ignition of the igniting agents 73 is brought into contact, in the hollow cylinder 61 is designed so as to have no through-hole, the flame can be prevented from directly coming into contact with and damaging the filter material 62. The generated high-temperature and high-pressure gas flows into the filter 70, passes through the filter material 62 in a radius direction and the circumferential direction, and flows into a space between an outer circumferential surface of the filter material 62 and an inner surface of the housing 63. When the gas generants 64 further burn and the pressure in the housing 63 reaches a predetermined pressure, the sealing member 68 sealing each gas discharging port 67 is ruptured, and clean gas of which the pressure is made even in the space between the outer circumferential surface of the filter material 62 and the inner surface of the housing 63, is discharged from each gas discharging port 67 to the airbag (not illustrated) to rapidly inflate and develop the airbag. Moreover, in flowing through the filter 70, the gas slowly loses an ingredient containing slag and is cooled to be discharged from each gas discharging port 67 into the airbag while repeatedly hitting against the hollow cylinder 61 and the filter material 62.

According to the present embodiment, the following effects can be obtained. In the conventional filter, an upper end of the whole filter serves as a "dam" for preventing the gas generants from overflowing when the inside of the filter is filled with the gas generants. Thus, the vertical length of the filter is required to correspond to the vertical length of a gas generant housing chamber. However, in the present invention, since only both ends of the hollow cylinder 61 project from the filter material 62 in the axis direction, only both ends serve as the "dam." As a result, the filter material 62 can be miniaturized in the axis direction, and further the gas generator 60 can be miniaturized. Furthermore, in the present invention, only the hollow cylinder 61 may be lengthened even when the housing is enlarged vertically in the axis direction so as to house many gas generants, it is not necessary to enlarge, similarly to the conventional filter, the filter vertically in the axis direction, and the weight of the filter can be kept to a minimum.

Additionally, since both ends of the hollow cylinder 61 are sealed with the pressing lid member 76 and the ring member 77a and the inside of the hollow cylinder 61 communicates with the outside of the filtermaterial 62 onlyvia the filtermaterial 62, the gas and particles generated by the combustion of the gas generants 64 can be prevented from directly leaking out.

Additionally, the shape, size and position of each through-hole 79A of the hollow cylinder 61 is adjusted to a desired shape, size and position respectively so that the filter material 62 is protected from the flame spouted from the ignitor device 66 at the ignition, and therefore melting damage of the filter material 62 can be suppressed, reduction of a filter performance can be suppressed, a gas flowpath can be controlled, and an efficient filter constitution can be obtained.

Additionally, since both ends of the filter for gas generators 70 are in the staircase shape, the filter 70 can correspond to the housing of the gas generator 60 even if the inner side of the housing is curved as shown in Fig. 4. Accordingly, since the filter for gas generators 70 is efficiently arranged in the housing 63, the gas generator 60 can be miniaturized while keeping the performance.

Additionally, when the ignitor device 66 further includes flame transmitting holes for spouting the flame in the axis direction of the hollow cylinder 61, the gas generants above the ignitor device can be efficiently burnt approximately together with the gas generants around the ignitor device.

Further, since the outer circumferences of both ends of the hollow cylinder are held and sealed with the pressing lid member 76 and the ring member 77, an assembling property of the gas generator 60 can be improved. Although, in the conventional filter, the gas generants housed in a space surrounded by the filter is cracked due to a constitution that a pressing lid member is inserted into the space surrounded by the filter, the gas generants are not cracked in assembling according to the present embodiment.

### Fourth Embodiment

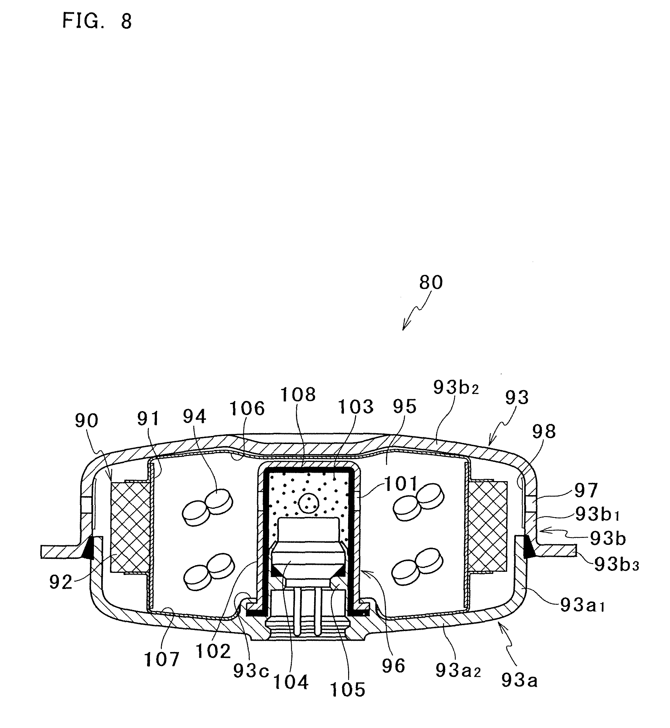

Next, a gas generator according to a fourth embodiment of the present invention will be described. In Fig. 8, a gas generator 80 according to the fourth embodiment includes: an approximate shortened cylindrical housing 93 formed by connecting a lower lid 93a to an upper lid 93b by press welding, welding, etc.; a combustion chamber 95 which is formed in the housing 93 and is filled with gas generants 94 for generating ahigh-temperaturegasbycombustion; afilter90arrangedaround the combustion chamber 95; and an ignitor device 96 which is attached to the housing 93 and ignites the gas generants 94 in the combustion chamber 95. Moreover, since the members, to which the symbols 61 to 68, 70 to 77 are attached in the above gas generator 60, are similar to members, to which the symbols 91 to 98, 100 to 107 are attached in the present embodiment, respectively, description regarding the points other than different points may be omitted.

The housing 93 includes the lower lid 93a and upper lid 93b, and is in an approximate disc shape. The lower lid 93a includes a cylindrical part 93a₁ and an approximate plate-shaped bottom board 93a₂ formed continuously from the cylindrical part 93a₁. The ignitor device 96 is provided at the center of the bottom board 93a₂. The ignitor device 96 includes: a cylinder body 102 with bottom of which the circumference has a plurality of flame spouting ports 101; igniting agents 103 with which the cylinder body 102 is filled; and an igniter 104 provided so as to abut against the igniting agents 103.

The upper lid 93b includes: a cylindrical part 93b₁; an approximate plate-shaped top board 93b₂ formed continuously from the cylindrical part 93b₁; and a flange part 93b₃ extended outward from the cylindrical part 93b₁ in a diameter direction.

The filter 90 includes: a hollow cylinder 91 which is formed of a metal plate similar to the metal plate 79 similarly to the hollow cylinder 61 of the third embodiment; and a filter material 92. The filter material 92 is formed around an outer circumference of the hollow cylinder 91, and has a filtering function. Additionally, the filter material 92 is formed so as to cover predetermined regions (similar to the regions 79b, 79c and 79d of the metal plate 79) of the metal plate processed into the hollow cylinder 91. Moreover, a material of the filter material 92 may be similar to that of the filter material 62 of the third embodiment.

Next, operation of the present embodiment will be described. Here, the case of mounting the gas generator 80 on an airbag system will be described as an example. When a crash sensor (not illustrated) detects a crash of a vehicle, the igniter 104 of the ignitor device 96 is ignited to ignite the igniting agents 103 by a crash detecting signal, the flame is spouted from the flame spouting ports 101 of the cylinder body 102 to the gas generants 94 to ignite the gas generants 94 and to generate a high-temperature and high-pressure gas. The generated high-temperature and high-pressure gas flows into the filter 90, passes through the filter material 92 in a radius direction and the circumferential direction, and flows into a space between an outer circumferential surface of the filter material 92 and an inner surface of the housing 93. When the gas generants 94 are further burnt and the pressure in the housing 93 reaches a predetermined pressure, the sealing member 98 sealing each gas discharging port 97 is ruptured, and clean gas of which the pressure is made even in the space between the outer circumferential surface of the filter material 92 and the inner surface of the housing 93 is discharged from each gas discharging port 97 to the airbag (not illustrated) to rapidly inflate and develop the airbag. Moreover, in flowing through the filter 90, the gas slowly loses the ingredient containing slag and is cooled to be discharged from each gas discharging port 97 into the airbag while repeatedly hitting against the hollow cylinder 91 and the filter material 92.

According to the present embodiment, nearly the same effect as that of the gas generator 60 of the third embodiment can be obtained. However, since no large curvedpart is provided in the inner side of the housing 93, unlike the gas generator 60, it is unnecessary to make both ends of the filter 90 staircase-shaped. Therefore, in this point, the effect of the gas generator 60 cannot be obtained.

Moreover, as the igniter, gas generants, housing, etc., which are not described in detail in the description, of the present invention, for example, those disclosed in Japanese Published Unexamined Patent Application No. 2005-53382, the patent document listed in the above Background Art, etc., are applicable. However, the igniter, gas generants, housing, etc., of the present invention are not limited to those disclosed in the above patent documents.

Moreover, modifications can be applied to the present invention without departing from the appended claims, and the present invention is not limited to the above-described embodiments and modifications.

### Brief Description of the Drawings

Fig. 1 is a cross sectional viewof a gas generator according to a first embodiment of the present invention;
Fig. 2 is a cross sectional viewof a gas generator according to a modification of the first embodiment of the present invention;
Fig. 3 is a cross sectional viewof a gas generator according to a second embodiment of the present invention;
Fig. 4 is across sectional viewof a gas generator according to a third embodiment of the present invention;
Fig. 5 is an appearance view of the gas generator shown in Fig. 4;
Fig. 6 is a cross sectional view of a filter of the gas generator of Fig. 4;
Fig. 7 is a developed view of a hollow cylinder used for the filter of Fig. 6; and
Fig. 8 is a cross sectional viewof a gas generator according to a fourth embodiment of the present invention.

### Description of Symbols

1, 1a, 31, 60, 80: Gas generator
2, 32, 63, 93: Housing
2a, 32a, 63b, 93b: Upper lid
2b, 32b, 63a, 93a: Lower lid
3, 33, 63b₂, 93b₂: Top board
4, 34, 67, 97: Gas discharging port
5, 7, 35, 37: Side cylinder
6, 36, 63a₂, 93a₂: Bottom board
8, 38, 63b₃, 93b₃: Flange
9, 39, 74, 104: Igniter
10, 40, 75, 105: Igniter holding part
11, 41, 62, 92: Filter material
12, 42, 76, 106: Pressing lid member
13, 43, 64, 94: Gas generant
14, 44, 77, 107: Ring member
15, 45, 68, 98: Sealing member
16a, 19a, 26a, 29a, 46a, 49a: Side cylindrical part
16b, 19b, 29b, 46b, 49b: Bottom part
16, 26, 46, 72, 102: Cylinder body
17, 47, 73, 103: Igniting agent
18a, 18b, 28a, 48a, 48b, 71, 101: Flame spouting port
19, 29, 49, 78, 108: Igniting agent filled container
20, 50, 66, 96: Ignitor device
21, 51: Filter pressing member
22, 52, 63c, 93c: Projecting part
26b: Hemispherical part
65, 95, S, S₁: Combustion chamber

## Claims

1. A gas generator comprising:
a metallic housing having a closure shell and an initiator shell;
a filter provided throughout an inner circumference of the housing in a circumferential direction;
a combustion chamber which is provided in the housing and in which gas generants for generating a high-temperature gas by combustion are housed; and
an ignitor device which is attached to the initiator shell and ignites and burns the gas generants in the combustion chamber,
and further comprising:
an igniting agent filled container which has the ignitor device therein and is filled with igniting agents; and
a cylinder body which is provided inside of the initiator shell and of which an inner wall is adhered to the whole outside of the igniting agent filled container,
wherein the combustion chamber is formed of a space surrounded by an inner wall of the initiator shell, an inner wall of the closure shell, an inner wall of a filter material and an outer wall of the cylinder body,
the cylinder body has flame spouting ports for spouting flame of the igniting agents into the combustion chamber on a side surface, and
parts corresponding to the flame spouting ports of the cylinderbodyof the igniting agent filled container are ruptured by an impact when the igniting agents are ignited by the ignitor device.

2. The gas generator according to claim 1,
wherein ends of the closure shell sides of the igniting agent filled container and the cylinder body are formed so as to be similar to each other in a shape of any one of flat, hemispheric, spherical band, cone, pyramid, polyhedron and staircase, and
flame spouting ports for rupturing predetermined parts of the end of the igniting agent filled container by an impact when the igniting agents are ignited by the ignitor device and for spouting flame of the igniting agents into the combustion chamber in a predetermined direction are formed in the end of the closure shell side of the cylinder body.

3. The gas generator according to claim 1 or 2,
wherein opening side ends of the igniting agent filled container and the cylinder body are formed in a flange shape to be collars, and
the collars of the igniting agent filled container and the cylinder body are crimped and fixed to the initiator shell together in a direction from a circumference side to inside.

4. The gas generator according to claim 1 or 2, wherein the igniting agent filled container is formed of aluminum, iron, steel, copper, alloy of these metals, or resin.

5. The gas generator according to claim 1 or 2, further comprising:
a pressing lid member for pressing and holding the filter in the housing,
wherein the filter has a plurality of through-holes in a side surface, and comprises a hollow cylinder, of which at least one bottom surface is opened, and a filter material formed on an outer circumference of the hollow cylinder, and
projecting parts of both ends of the hollow cylinder in an axis direction project from the filter material in the axis direction.

6. The gas generator according to claim 5,
wherein the hollow cylinder comprises: a first through-hole group formed in a band-shaped region in a circumferential direction; a second through-hole group formed in a band-shaped region and having a predetermined distance from the first through-hole group; and a part which is formed between the first through-hole group and the second through-hole group, and has no through-hole, and
the ignitor device comprises flame transmitting holes through which flame is spouted toward the part having no through-hole when the ignitor device is ignited.

7. The gas generator according to claim 5,
wherein the pressinglid member holdsouter circumferences of the projecting parts of both ends of the hollow cylinder in the axis direction, and seals openings of both ends of the hollow cylinder.

8. The gas generator according to claim 5, wherein the projecting parts of both ends of the hollow cylinder in the axis direction have no through-hole.

9. The gas generator according to claim 5,
wherein the through-hole is formed in a desired shape, size and position so that a part of the cylinder body blocks flame spouted from the igniter at the ignition to protect the filter material and to control a gas flow path when the filter is built into the gas generator having the igniter.

10. The gas generator according to claim 5,
wherein the filter material comprises: a first filtering-cooling part formed on an outer circumference of the hollow cylinder; and a second filtering-cooling part which is formed on an outer circumference of the first filtering-cooling part and is shorter than the first filtering-cooling part in the axis direction, and
the first filtering-cooling part and the second filtering-cooling part form a staircase shape on at least one of the projecting parts of both ends in the axis direction.

11. The gas generator according to claim 5, wherein the filter material is in a winding shape formed by winding a wire around an outer circumference of the hollow cylinder.

12. The gas generator according to claim 5, wherein the filter material is formed by winding a metal plate around an outer circumference of the hollow cylinder, the metal plate having a plurality of holes and having projecting parts on circumferences of the holes.

13. The gas generator according to claim 5, wherein the hollow cylinder is formed by processing a wire netting or porous plate.
